# FASCICULE DE BREVET EUROPEEN

(11) **EP 4 005 008 B1**
(45) Date de publication et mention de la délivrance du brevet: **19.07.2023**
(21) Numéro de dépôt: 20744079.3
(22) Date de dépôt: 29.07.2020
(51) Int. Cl.: H01M 50/20, H01M 10/613, H01M 10/625, H01M 10/6554, H01M 10/6556, H01M 10/6567

(54) **MODULE ET DISPOSITIF DE REFROIDISSEMENT POUR BATTERIE ET BATTERIE CORRESPONDANTE**
BATTERIEKÜHLMODUL UND VORRICHTUNG SOWIE ENTSPRECHENDE BATTERIE
BATTERY COOLING MODULE AND DEVICE, AND CORRESPONDING BATTERY

(30) Priorité: 30.07.2019 FR 1908679
(43) Date de publication de la demande: 01.06.2022
(73) Titulaire: Sogefi Air & Cooling, 78286 Guyancourt (FR)
(72) Inventeur: BECKER, Nicolas, 68320 PORTE-DU-RIED (FR); SCHUB, Arnaud, 68040 INGERSHEIM (FR); MEYER, Dominique, 68230 WIHR-AU-VAL (FR); LANGOT, Maxime, 68360 SOULTZ-HAUT-RHIN (FR)
(74) Mandataire: Cabinet Nuss
(86) Numéro de dépôt international: PCT/EP2020/071396
(87) Numéro de publication internationale: WO 2021/018961

(56) Documents cités:
- CN-U- 209 056 573
- DE-A1-102015 115 138
- DE-B3-102013 207 592

## Description

La présente invention concerne le domaine des sources d'énergie électriques autonomes, en particulier celles embarquées dans des véhicules automobiles, du type unité de batterie avec des moyens de contrôle ou de régulation de température intégrés, a pour objets un module de refroidissement pour les cellules d'une telle batterie, une unité de batterie comportant de tels modules et un véhicule automobile hybride ou électrique comportant au moins une telle unité.

Les véhicules hybrides/électriques sont équipés d'une batterie permettant de stocker l'énergie électrique nécessaire à leur fonctionnement. Les enjeux actuels nécessitent d'optimiser la conception des unités de batterie aussi dénommées « packs batteries », afin d'en tirer les meilleures performances en terme de durée de vie (charge/décharge) et d'autonomie de roulement.

Les batteries mises en oeuvre ont idéalement besoin de fonctionner à des températures entre 10° C et 30° C, en particulier les batteries à haute densité de stockage, du type par exemple Li-ion ou Li-polymère. Une température trop basse impacte l'autonomie et une température trop élevée impacte la durée de vie des batteries. Il est donc nécessaire de réguler au mieux la température de telles batteries.

Dans le cadre des applications embarquées sur véhicules, il existe des solutions de batteries refroidies par air mais l'échange thermique reste assez limité. La tendance actuelle est d'utiliser un fluide caloporteur afin d'améliorer les échanges thermiques et d'augmenter l'efficacité de la régulation.

De plus, les logements de réception de ces batteries peuvent actuellement être réalisés directement par une partie du véhicule ou consister en des cavités formées dans une pièce structurelle de ce véhicule. Toutefois, ces solutions sont très peu flexibles en termes d'implantation et rendent difficiles la maintenance. Les solutions de packs batteries autonomes et non intégrées dans la structure du véhicule sont de ce fait à privilégier.

De nombreuses conceptions existent dans l'état de la technique : elles utilisent des solutions métalliques (acier, aluminium, etc.) avec une distribution de fluide caloporteur par durites jusqu'à des plaques de refroidissement disposées à l'intérieur du pack batterie, sur lesquelles reposent les modules regroupant les cellules ou éléments de la batterie.

Il en résulte une construction complexe, formée par l'assemblage d'un nombre important de pièces, nécessitant la réalisation de nombreux raccordements étanches de conduits spécifiques lors de la fabrication (dont la tenue au vieillissement peut être problématique) et constituant une structure encombrante, multicomposante et non optimisée en termes d'efficacité thermique.

De plus, le boîtier de l'unité de batterie de ces solutions connues étant réalisé en métal (préférentiellement de l'aluminium), il ne peut isoler thermiquement et électriquement le pack batterie vers l'extérieur, présente de plus un prix de revient élevé et est en outre sujet à la corrosion.

En outre, aucune mesure efficace n'est prévue dans ces solutions connues pour préserver la batterie en cas de fuite de liquide caloporteur à l'intérieur du boîtier.

Par les demandes de brevets français FR 3 062 749 et FR 3 062 521 au nom de la demanderesse, on connaît déjà des unités de batterie intégrant des moyens de refroidissement et des moyens de circulation/distribution de fluide caloporteur directement dans le corps du boîtier. Bien que permettant de surmonter les limitations évoquées ci-dessus, ces unités de batterie ont une structure figée, ne sont pas modulables et ne sont pas adaptées pour une mise en oeuvre avec un boîtier existant. De plus, les pièces formant le boîtier peuvent présenter des dimensions importantes et être de structures complexes.

Par le document FR 3 003 938, on connaît une plaque d'échange thermique pour batterie avec un corps de base en matière plastique sur lequel est rapportée une plaque métallique, des canaux de circulation de fluide caloporteur étant formés dans le corps de base pour former des conduits fermés avec la plaque métallique.

Des embouts séparés de raccordement des conduits précités sont solidarisés avec la plaque métallique, avec interposition d'un joint, par fixation mécanique, emboutissage ou par utilisation d'une pièce de raccordement intermédiaire.

En plus d'une solidarisation spécifique, d'une perte de surface utile en terme de refroidissement et d'une exposition directe et individuelle aux agressions extérieures, l'arrangement de ces embouts entraîne un raccordement par le dessus à des tuyaux d'alimentation et d'évacuation de fluide, pouvant interférer avec les moyens de connexion électrique des cellules/modules de la batterie.

Par le document WO 2019/046012 enfin, on connaît un système de refroidissement de batterie avec une pluralité de plaques de refroidissement reliées chacune par une paire de raccords tubulaires coudés avec des lignes communes d'alimentation et d'évacuation de fluide caloporteur sous la forme d'un profilé en aluminium extrudé comportant deux chambres longitudinales auxquelles les raccords sont connectés.

Il en résulte un arrangement complexe d'un grand nombre de raccords individuels et l'imposition d'une configuration obligatoire à l'ensemble des plaques de refroidissement.

CN 209 056 573 U divulgue un module de refroidissement pour cellules ou modules de batterie électrique de véhicule, comprenant un corps principal sous forme de plaque composite rectangulaire et intégrant un circuit pour la circulation d'un fluide caloporteur avec une entrée et une sortie de fluide, la plaque composite comprenant une plaque de base, dans laquelle sont ménagés un réseau de canaux, et une plaque de recouvrement, qui est rapportée sur la plaque de base avec réalisation d'une étanchéité périphérique, qui forme par coopération avec les canaux de la plaque de base des conduits et qui est destinée à venir en contact surfacique avec des cellules de la batterie a refroidir.

DE 10 2013 207592 B3 divulgue un module de batterie comprenant une plaque principale sur laquelle des cellules sont positionnées. La plaque principale possède le long de l'un de ses cotés latéraux une formation qui est proéminente et inclinée par rapport à cette plaque.

DE 10 2015 115138 A1 divulgue une batterie pour un véhicule avec un boîtier formé par deux parts. Chaque part possède une plaque principale avec un canal de refroidissement et une plaque perpendiculaire.

L'invention a pour but de surmonter au moins les principales limitations de l'état de la technique évoquées ci-dessus.

A cet effet, l'invention a pour objet un module de refroidissement pour cellules ou module(s) de batterie électrique, en particulier de batterie de véhicule hybride ou électrique, comprenant un corps principal sous forme de plaque composite préférentiellement de forme rectangulaire et intégrant au moins un circuit pour la circulation d'un fluide caloporteur avec une entrée et une sortie de fluide, cette plaque composite comprenant une plaque de base en un matériau rigide à faible conductivité thermique, dans laquelle sont ménagés un réseau de canaux, et au moins une plaque de recouvrement en une matière à conductivité thermique élevée, qui est rapportée sur la plaque de base avec réalisation d'une étanchéité au moins périphérique, qui forme par coopération avec les canaux de la plaque de base le ou les conduit(s) ou segments de conduit(s) du ou des circuit(s) et qui est destinée à venir en contact surfacique avec des cellules ou au moins un module de la batterie à refroidir, chaque ensemble [plaque de recouvrement/circuit de conduit(s)] formant un site de réception contrôlé en température,
module caractérisé en ce qu'il comprend également, le long de l'un des côtés latéraux de la plaque composite, une formation qui est proéminente et inclinée par rapport à ladite plaque composite, qui intègre des portions de conduit(s) d'amenée et d'évacuation reliées respectivement à l'entrée et à la sortie de fluide du ou de chacun des circuit(s) de conduit(s) de la plaque composite, qui est réalisée en une matière à faible conductivité thermique, et dont au moins une partie, préférentiellement une partie majeure comprenant des canaux correspondant aux portions de conduit(s) d'amenée et d'évacuation, est réalisée d'un seul tenant avec la plaque de base du corps principal.

L'invention vise également un dispositif de refroidissement comprenant au moins deux modules précités, une unité de batterie intégrant des modules de refroidissement du type précité et un véhicule automobile comprenant au moins une telle batterie.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1A] et
[Fig. 1B] sont des vues schématiques en perspective et en coupe d'un module de refroidissement selon un premier mode de réalisation de l'invention ;
[Fig. 2] est une vue à une autre échelle du détail A de la figure 1B ;
[Fig. 3A] et
[Fig. 3B] sont des vues de dessus d'un dispositif de refroidissement pour batterie, à l'état éclaté (3A) et à l'état assemblé (3B), comprenant quatre modules tels que représentés figures 1A et 1B ;
[Fig. 4] et
[Fig. 5] sont des vues en perspective de variantes de réalisation des modules des figures 1A et 1B ;
[Fig. 6A],

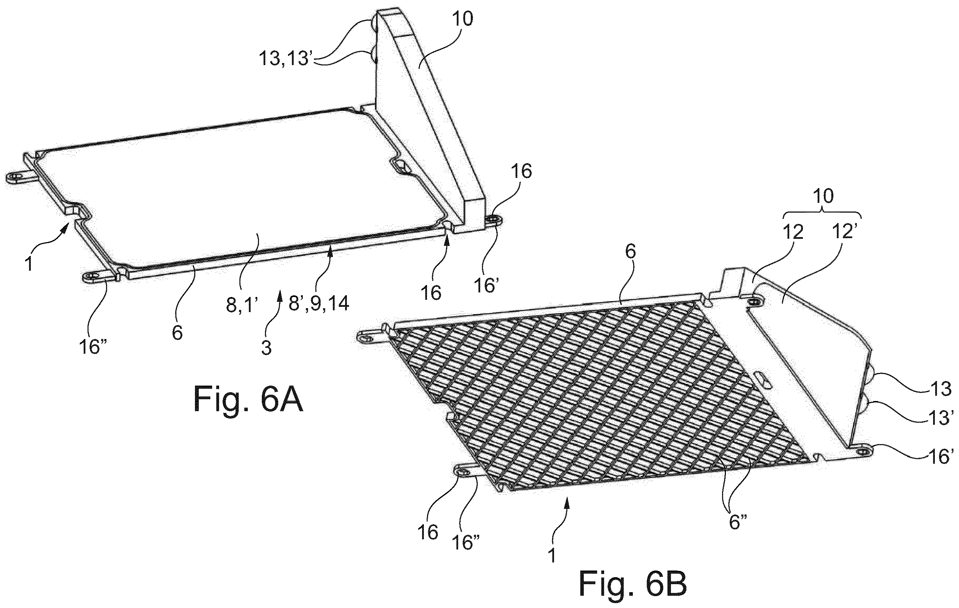

[Fig. 6B] et

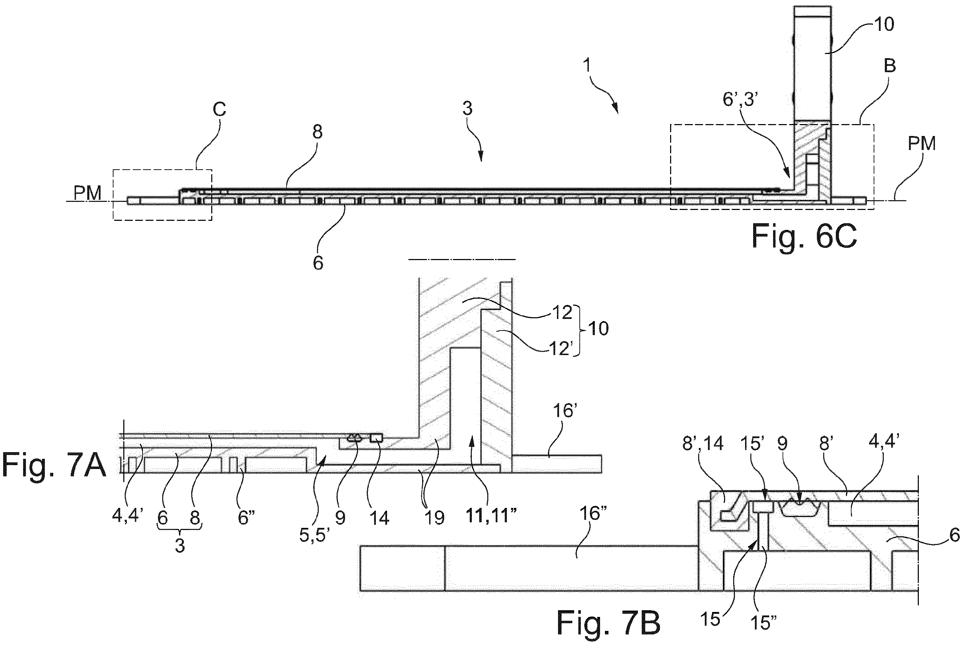

[Fig. 6C] sont des vues respectivement en perspective de dessus (6A), en perspective de dessous, (6B) et en coupe (6C) d'un module de refroidissement selon un autre mode de réalisation de l'invention ;
[Fig. 7A] et
[Fig. 7B] sont des vues à une échelle différente des détails B et C de la figure 6C ;

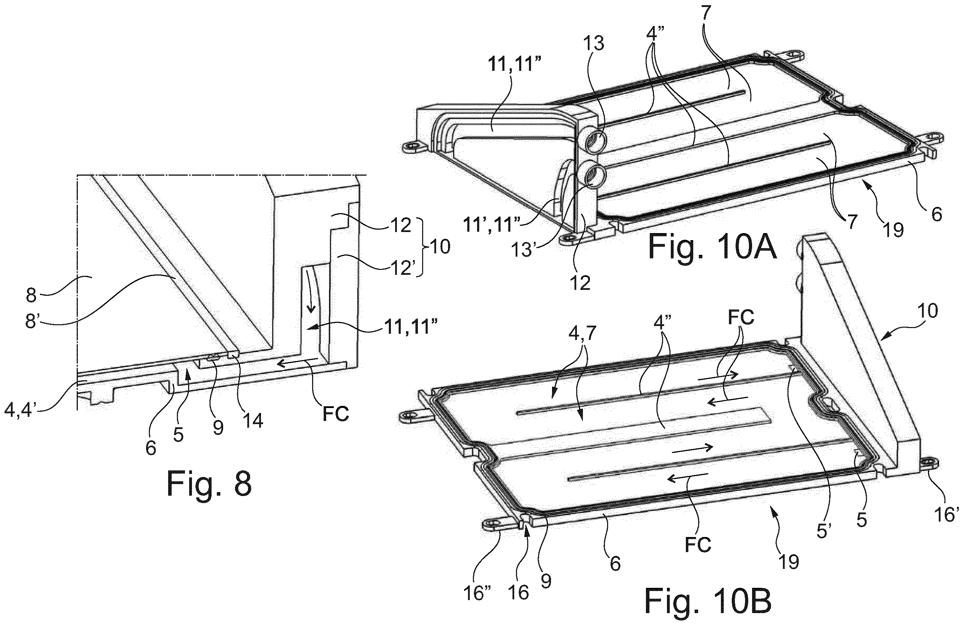

[Fig. 8] est une vue en perspective du détail B représenté figure 7A ;

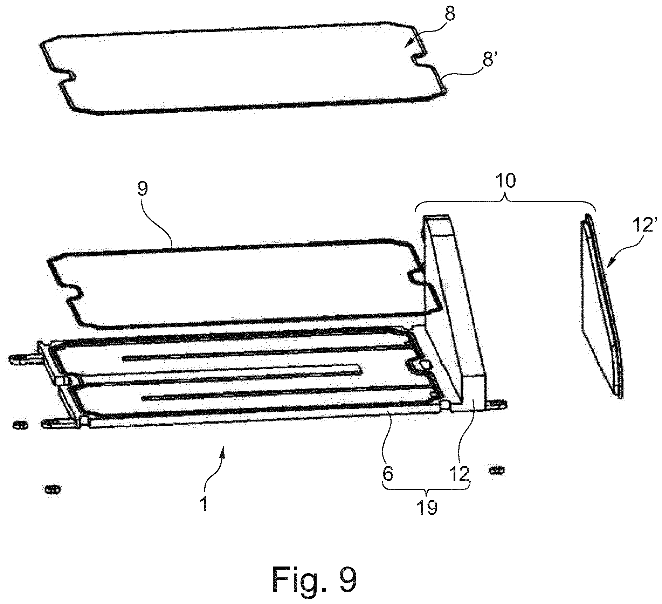

[Fig. 9] est une vue éclatée du module de refroidissement représenté figures 6 ;
[Fig. 10A] et
[Fig. 10B] sont des vues en perspective selon deux angles différents de la pièce monobloc moulée formant simultanément corps de base et plaque de base du module de refroidissement des figures 6 et 9 ;

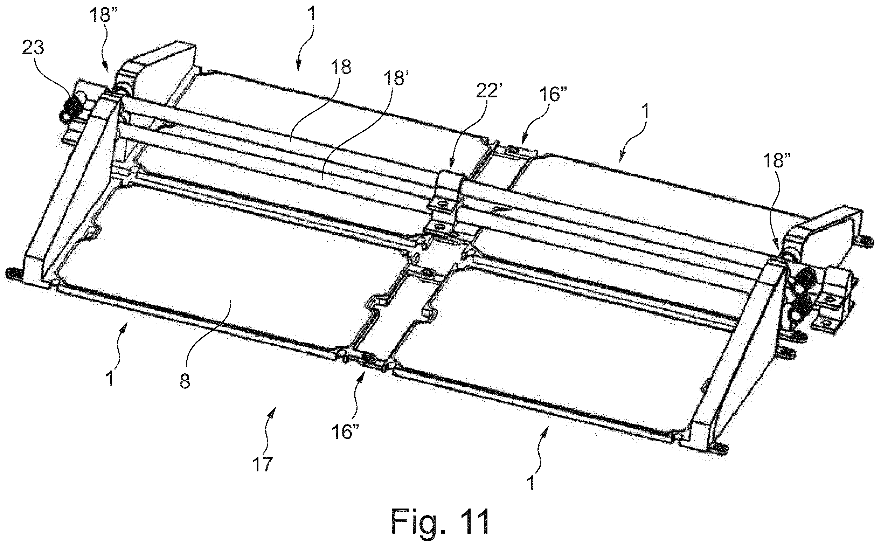

[Fig. 11] est une vue en perspective d'un dispositif de refroidissement selon l'invention formé par l'assemblage mécanique et fluidique de quatre modules de refroidissement tels que représentés figures 6 et 9 ;
[Fig. 12A],

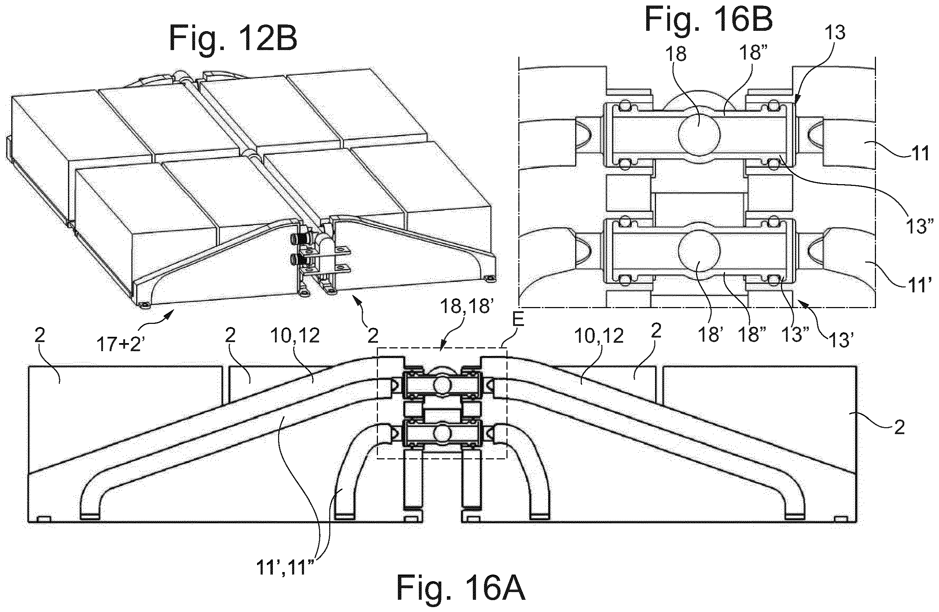

[Fig. 12B] et

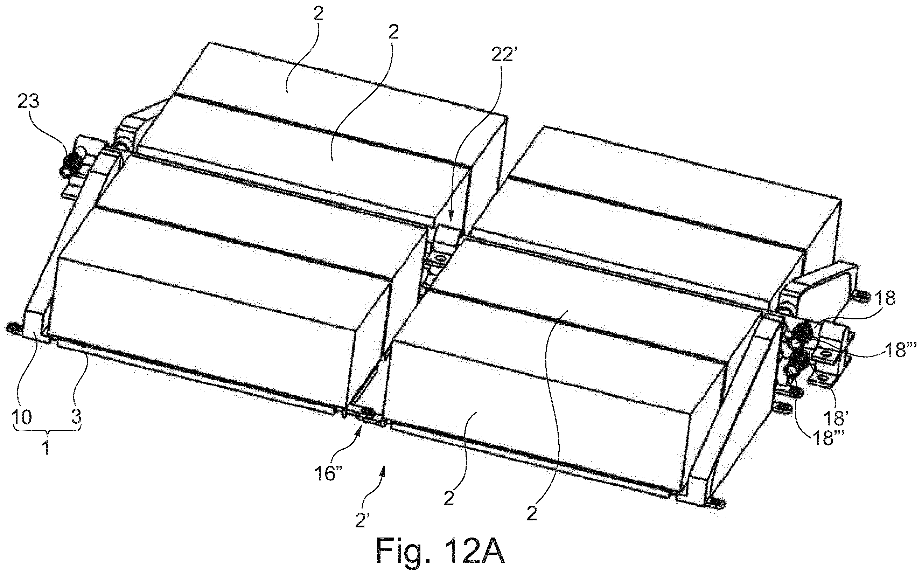

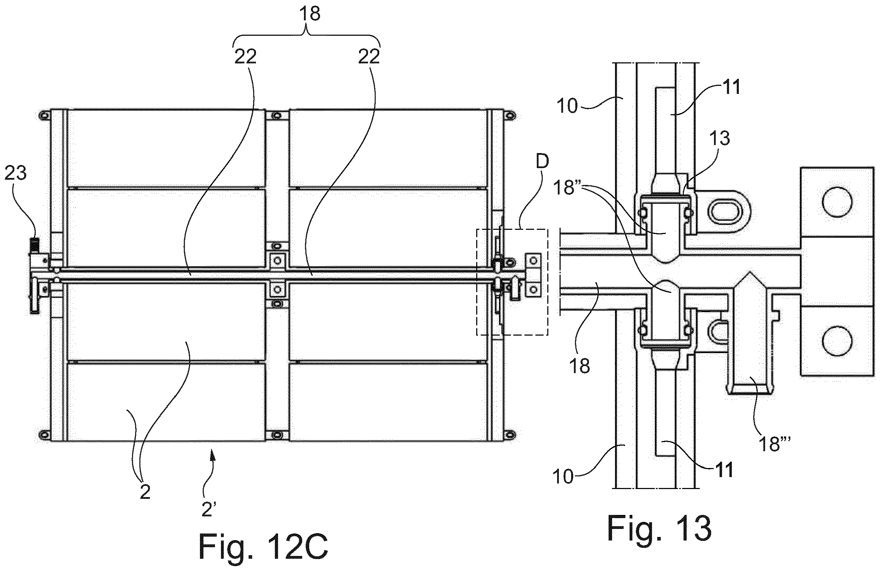

[Fig. 12C] sont des vues en perspective selon deux angles différents (figures 12A et 12B) et de dessus (figure 12C) du dispositif de refroidissement de la figure 11 équipé de huit modules de batterie (sur la figure 12C le conduit d'alimentation est coupé selon un plan parallèle au plan d'appui des modules de batterie) ;
[Fig. 13] est une vue à une échelle différente du détail D de la figure 12C ;

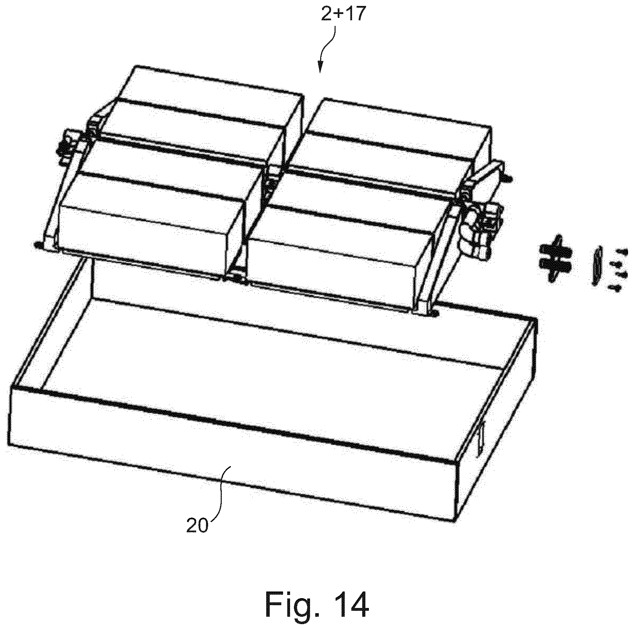

[Fig. 14] est une vue en perspective illustrant le montage de l'ensemble formé par les modules de batterie et le dispositif de refroidissement et illustré sur les figures 12, dans un boîtier de protection (ici le bac inférieur d'un boîtier en deux parties - le couvercle de fermeture supérieur n'est pas représenté) ;

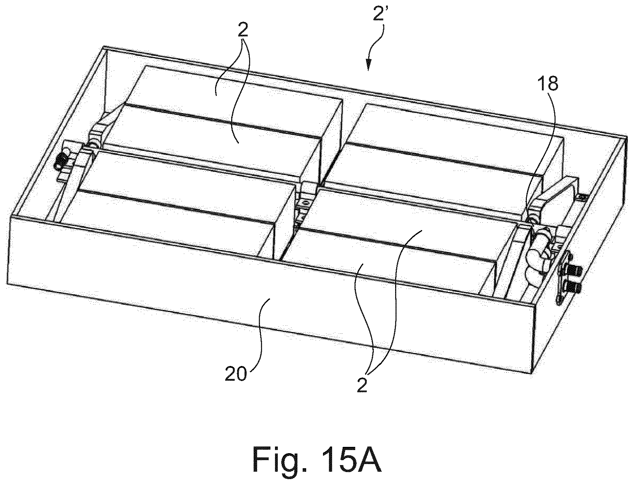

[Fig. 15A] et

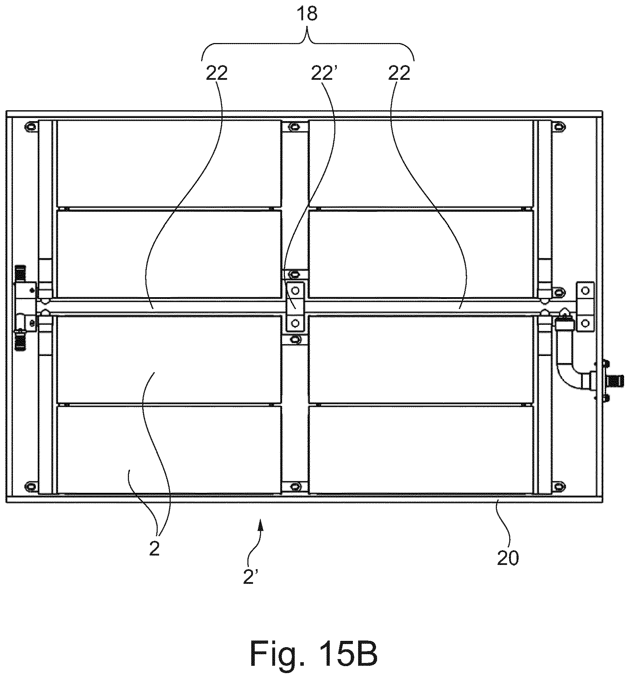

[Fig. 15B] sont des vues de dessus en perspective (15A) et en élévation (15B) d'une unité de batterie résultant du montage de la figure 14 ;
[Fig. 16A] est une vue en élévation selon la direction Z du module de refroidissement pourvu de modules de batterie représenté figure 12B, les plaques complémentaires des formations proéminentes des modules étant enlevées, et,
[Fig. 16B] est une vue à une échelle différente du détail E de la figure 16A.

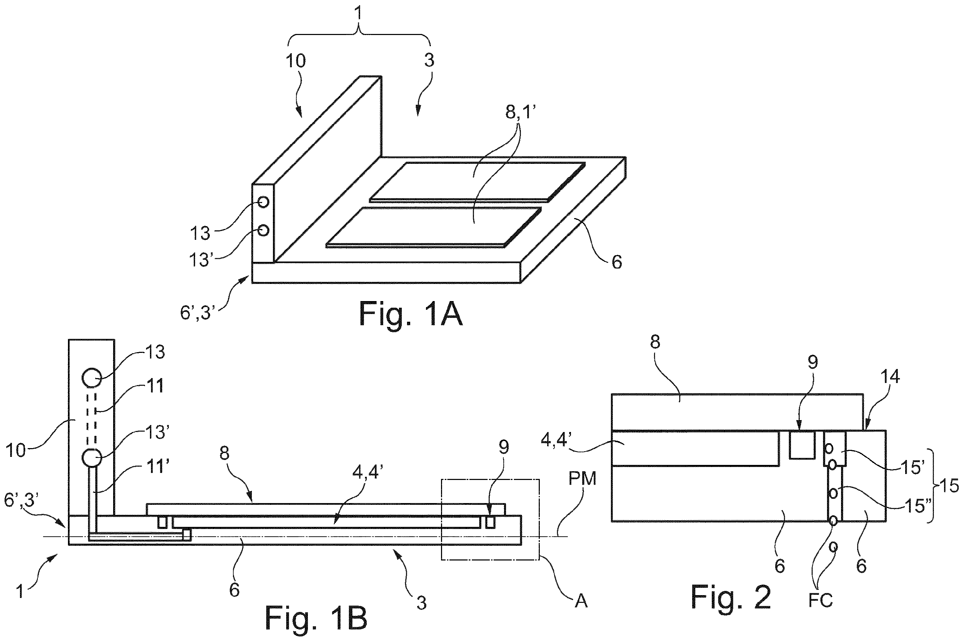

Les figures 1 à 9 illustrent, sous forme de différentes variantes constructives, un module de refroidissement 1 pour cellules ou module(s) 2 de batterie électrique 2', en particulier de batterie de véhicule hybride ou électrique, comprenant un corps principal 3 sous forme de plaque composite préférentiellement de forme rectangulaire et intégrant au moins un circuit 4 pour la circulation d'un fluide caloporteur avec une entrée 5 et une sortie 5' de fluide, cette plaque composite 3 comprenant une plaque de base 6 en un matériau rigide à faible conductivité thermique, dans laquelle sont ménagés un réseau de canaux 7, et au moins une plaque de recouvrement 8 en une matière à conductivité thermique élevée, qui est rapportée sur la plaque de base 6 avec réalisation d'une étanchéité au moins périphérique 9, qui forme par coopération avec les canaux 7 de la plaque de base 6 le ou les conduit(s) 4 ou segments de conduit(s) 4' du ou des circuit(s) et qui est destinée à venir en contact surfacique avec des cellules ou au moins un module 2 de la batterie 2' à refroidir, chaque ensemble [plaque de recouvrement 8/circuit de conduit(s) 4] formant un site de réception 1' contrôlé en température.

Conformément à l'invention, ledit module 1 comprend également, le long de l'un des côtés latéraux 3' de la plaque composite 3, une formation 10 qui est proéminente et inclinée par rapport à ladite plaque composite 3, qui intègre des portions de conduit(s) d'amenée et d'évacuation 11, 11' reliées respectivement à l'entrée 5 et à la sortie 5' de fluide du ou de chacun des circuit(s) de conduit(s) 4 de la plaque composite 3, qui est réalisée en une matière à faible conductivité thermique, et dont au moins une partie, préférentiellement une partie majeure 12 comprenant des canaux 11" correspondant aux portions de conduit(s) d'amenée 11 et d'évacuation 11', est réalisée d'un seul tenant avec la plaque de base 6 du corps principal 3.

Grâce à ces dispositions, il est possible de fournir un module de refroidissement 1 dans lequel la possibilité d'échange calorique entre le fluide et l'environnement extérieur est concentrée au niveau de la ou des plaque(s) de recouvrement 8 sur lesquelles reposent les cellules, agencées en un ou plusieurs module(s) 2. De plus, non seulement le(s) circuit(s) intégré(s) 4 amenant le fluide caloporteur en contact avec la ou les plaque(s) 8 (par le biais de segments de conduits 4' intercalés entre les plaques 6 et 8) sont structurellement intégrés dans le module 1, mais également les portions de conduits 11 et 11' assurant la connexion fluidique entre le(s) circuit(s) 4 et les lignes extérieures d'alimentation et d'évacuation 18, 18'.

Ainsi, tout raccordement spécifique de conduit ou de tube au niveau du module 1 est évité, l'exposition des chemins de circulation est limitée, et la connexion fluidique du module 1 avec l'extérieur est réalisée à une extrémité de ce dernier, en dehors de la zone de réception des cellules ou modules 2 (espace de réception dégagé) et à distance (décalage en hauteur) par rapport au plan d'appui fourni par la ou chaque plaque de recouvrement 8.

Une conductivité thermique λ élevée, et plus généralement un bon transfert thermique entre le fluide FC et les cellules ou modules 2, est atteinte en utilisant pour la ou chaque plaque de recouvrement 8 un matériau intrinsèquement bon conducteur thermique (plaquette métallique par exemple), ce en faible épaisseur, en relation avec une surface de contact maximale et une qualité de contact optimisée entre cette plaque 8 et les cellules.

La faible conductivité thermique quant à elle peut être atteinte en utilisant un matériau faiblement conducteur thermique, voire isolant thermiquement, en combinaison avec une épaisseur relativement importante de la paroi de l'élément surfacique 9.

Typiquement, on entend dans la présente par conductivité thermique λ élevée, des valeurs de λ telles que λ > 50 W.m⁻¹.K⁻¹, préférentiellement λ > 100 W.m⁻¹.K⁻¹ et par faible conductivité thermique λ, des valeurs des λ telles que λ < 1 W.m⁻¹.K⁻¹, préférentiellement λ < 0,5 W.m⁻¹.K⁻¹.

Avantageusement, le matériau à bonne conductivité thermique a une conductivité entre 100W/m/K et 300 W/m/K, typiquement 200W/m/K comme l'aluminium. De manière équivalente, le matériau à conductivité thermique faible a une conductivité entre 0,05 W/m/K et 0,5 W/m/K, typiquement 0,2 W/m/K comme le plastique de type PP GF30.

Dans le cadre de la présente invention, plus la différence de conductivité thermique entre la plaque de recouvrement 8 (à conductivité thermique élevée - par exemple plaque en matériau métallique de faible épaisseur) et la plaque de base 6 (à conductivité thermique faible - par exemple paroi en matériau plastique de forte épaisseur) sera importante, plus l'effet bénéfique de l'invention sera important.

Comme évoqué ci-dessus, le matériau de la plaque de recouvrement 8, préférentiellement de l'aluminium, peut également être non métallique, et par exemple consister en un matériau thermoplastique ou thermodur, chargé en additif pour augmenter sa conductivité thermique.

La plaque de recouvrement 8 peut, en variante, également être de nature souple ou flexible pour s'adapter et rattraper les défauts de planéité des modules, tout en étant bon conducteur thermique (en silicone par exemple, préférentiellement chargé).

Préférentiellement, la formation proéminente 10 se présente sous la forme d'une portion de plaque s'étendant sensiblement perpendiculairement au plan médian PM de la plaque composite 3 et prolongeant continûment un bord latéral 6' de la plaque de base 6, préférentiellement un bord correspondant à une largeur du rectangle formé par la plaque composite 3.

Ainsi, la formation 10 constitue une paroi latérale par rapport à la plaque 3, ces deux éléments formant ensemble une structure de cornière, à section en L, qui peut être facilement logée dans un boîtier en reposant sur le fond de ce dernier et en étant calée contre une paroi latérale dudit boîtier.

En outre, et de manière avantageuse, la formation proéminente 10 est pourvue, au niveau des extrémités des portions de conduit(s) d'amenée et d'évacuation 11, 11', qui sont situées à l'opposé de leurs extrémités communiquant avec l'entrée 5 et la sortie 5' de fluide du ou de chaque circuit de conduit(s) 4 intégré à la plaque composite 3, de ports ou d'embouts d'alimentation et d'évacuation 13, 13' décalés par rapport au plan médian PM de la plaque composite 3, situés avantageusement à distance au-dessus de la plaque de recouvrement 8 concernée et débouchant latéralement de ladite formation 10, par exemple d'une tranche latérale de cette dernière (figures 1, 6 et 10).

Pour faciliter la fabrication du module de refroidissement, il peut être prévu que la formation proéminente 10 intégrant des portions de conduit(s) d'amenée 11 et d'évacuation 11' et ayant une constitution d'ensemble en forme de portion de plaque, présente une structure composite et comprend un corps de base 12 dans lequel sont ménagés des canaux 11" correspondant aux portions de conduit(s) d'amenée 11 et d'évacuation 11' et une plaque complémentaire 12' délimitant par coopération avec lesdits canaux 11" lesdites portions de conduit(s) 11 et 11', les embouts ou ports d'entrée 13 et de sortie 13' de ces dernières débouchant latéralement au niveau d'une tranche de ladite portion de plaque 10 (figures 6B, 7A, 8, 9 et 10A).

Préférentiellement, lorsque le corps principal 3 a une forme rectangulaire, le côté latéral 3' présentant la formation proéminente 10 en forme de paroi ou de portion de plaque est l'un des petits côtés dudit rectangle.

Cette paroi ou portion de plaque 10 intégrant les portions de conduit 11 et 11' peut présenter une longueur égale ou inférieure à la dimension du côté latéral 3', selon l'encombrement imposé, les nécessités de connexion fluidique, l'économie de matière ou analogue.

Bien entendu, la plaque 10, qui peut servir également d'élément structurel, de butée et/ou d'appui latéral pour le module de refroidissement 1 et éventuellement de paroi d'arrêt pour les cellules, peut être une pièce séparée rapportée sur un côté de la plaque de base 6 et solidarisée avec elle par emboîtement, collage, soudure ou autre, avec réalisation d'une étanchéité entre les entrée/sortie 5, 5' et les portions de conduit 11, 11'.

Toutefois, de manière préférée, la plaque de base 6 et le corps de base 12 (de la plaque composite 10) consistent en une pièce monobloc 19 moulée en matière thermoplastique, la ou chaque plaque de recouvrement 8 consistant en une plaque métallique, préférentiellement en aluminium.

La formation 10 en forme de plaque ou de paroi peut présenter différentes formes et des contours variables, par nécessité, par gain de matière, par facilité constructive ou par soucis d'encombrement. En particulier le bord supérieur de cette formation peut être droit (c'est-à-dire parallèle au plan médian du corps principal 3 - cf. figures 1), être incliné (cf. figures 6, 9 et 10) ou de forme quelconque. En outre, il peut être nu ou être équipé d'accessoires fonctionnels supplémentaires.

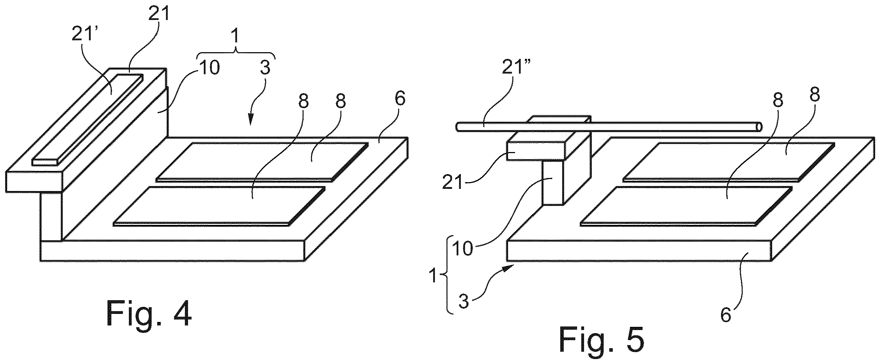

Conformément à de possibles développements additionnels, illustrés schématiquement sur les figures 4 et 5, il peut être prévu que la formation proéminente 10, préférentiellement sous forme de plaque ou de paroi verticale, comporte ou soit pourvue d'une platine 21, configurée pour supporter une carte électronique 21', faisant par exemple partie d'un système de gestion de la batterie 2', un câble de raccordement électrique 21" ou analogue.

En accord avec un premier mode de réalisation, illustré à titre d'exemples sur les figures 1 à 5, le module 1 peut comporter au moins deux sites de réception distincts 1' contrôlés en température, chaque site 1' comprenant une plaque de recouvrement 8 et un circuit 4 de conduits de circulation fluidique associé, les différents circuits 4 étant soit reliés fluidiquement en série et ensemble à une unique paire de portions de conduits d'amenée 11 et d'évacuation 11', soit reliés chacun séparément et indépendamment à une paire propre de portions de conduits d'amenée 11 et d'évacuation 11'.

En accord avec un second mode de réalisation, illustré à titre d'exemple sur les figures 6 à 10, le module 1 peut comprendre une unique plaque de recouvrement 8 et un unique circuit de conduits de circulation fluidique 4, formant ensemble un unique site de réception 1' contrôlé en température, sur lequel est destiné à venir en appui un ou plusieurs module(s) de batterie 2.

En vue d'aboutir à un échange thermique efficace et simultanément de disposer d'une surface d'échange maximale pour une taille donnée de la plaque de base 6, chaque circuit 4 de conduit(s) de circulation de fluide caloporteur FC associé à une plaque de recouvrement 8 thermiquement conductrice est composé de segments de conduit plats 4' reliés fluidiquement en série pour constituer un arrangement en forme de serpentin entre l'entrée 5 et la sortie 5' du circuit 4. L'ensemble des segments de conduit 4' du circuit 4 forme ainsi un espace de circulation surfacique et aplati en forme de lame entre les plaques de base 6 et de recouvrement 8, avec une extension surfacique sensiblement continue à l'exception des parois de compartimentation 4" définissant le chemin de circulation fluidique dans le circuit 4 considéré (figures 6C, 7A, 7B, 10A et 10B).

Selon une caractéristique de l'invention, et comme le montrent par exemple les figures 2, 7A, 7b, 8 et 9, la ou chaque plaque de recouvrement 8 est solidarisée au moins périphériquement, de manière continue ou non, par l'intermédiaire d'une liaison 14 matière, adhésive ou mécanique ou encore par soudure, à la plaque de base 6, avec réalisation d'une étanchéité aux liquides continue 9 autour du circuit de conduit(s) 4 associé à la plaque de recouvrement 8 considérée, par exemple par mise en place d'un joint de compression 9 entre cette dernière et la plaque de base 6.

Conformément à une variante constructive avantageuse de l'invention, ressortant à titre d'exemple des figures 7A, 7B 8 et 9, la ou chaque plaque de recouvrement 8 peut comporter un bord 8' formant cadre périphérique, d'un seul tenant ou rapporté, notamment par surmoulage, et qui est solidarisé avec la plaque de base 6, ledit bord 8' étant réalisé avantageusement en un matériau autorisant un soudage (par exemple par vibration, par laser, au gaz chaud ou analogue) avec ladite plaque de base 6, la plaque de recouvrement 8 considérée étant le cas échéant également solidarisée avec la plaque de base 6 en au moins un endroit à l'intérieur du cadre 8', par exemple au niveau d'une paroi de compartimentation 4" de ladite plaque de base 6.

Afin de préserver les cellules en cas de fuite éventuelle de liquide caloporteur FC au niveau de la plaque composite 3 et de pouvoir garantir l'acheminement du liquide ayant fui vers un unique emplacement prédéfini, l'invention peut prévoir, comme le montrent par exemple les figures 2 et 7B, qu'un chemin de fuite 15 soit associé à chaque site de réception 1', ledit chemin de fuite 15 comprenant une rainure ou un canal collecteur(trice) 15' à extension circonférentielle périphérique et au moins un passage d'évacuation 15" débouchant sur la face de la plaque de base 6 opposée à la plaque de recouvrement 8.

Préférentiellement, le canal ou la rainure 15" s'étend entre l'étanchéité 9 et la liaison 14 périphérique existant entre les plaques de base 6 et de recouvrement 8, le chemin de fuite 15 étant préférentiellement formé et situé entièrement dans la plaque de base 6.

En vue de faciliter la solidarisation rigide du module de refroidissement 1 avec le boîtier 20 dans lequel il est destiné à être monté, la plaque de base 6 peut être pourvue de sites de fixation 16, tels que par exemple des perçages, des oeillets ou analogues, ménagés dans le corps de ladite plaque 6 ou dans des pattes 16' saillantes latéralement.

De plus, lorsque plusieurs modules de refroidissement 1 doivent être installés dans un même boîtier 20, il peut être avantageux de les relier rigidement entre eux pour former une unité structurelle, en plus d'une unité fonctionnelle. Une constitution rigide de la plaque composite 3 est également souhaitable pour un support fiable dans le temps, et sans dommage en cas de chocs, des modules 2'.

A cet effet, la plaque de base 6 peut comporter des moyens 16" d'accouplement mécanique avec au moins un autre module 1 (par exemple des formations complémentaires mutuellement imbricables, des pattes de fixation coopérantes ou analogues) et/ou être pourvue de formations de rigidification 6" sur sa face inférieure opposée à la ou aux plaque(s) de recouvrement 8 (nervures, ailes, épaississements).

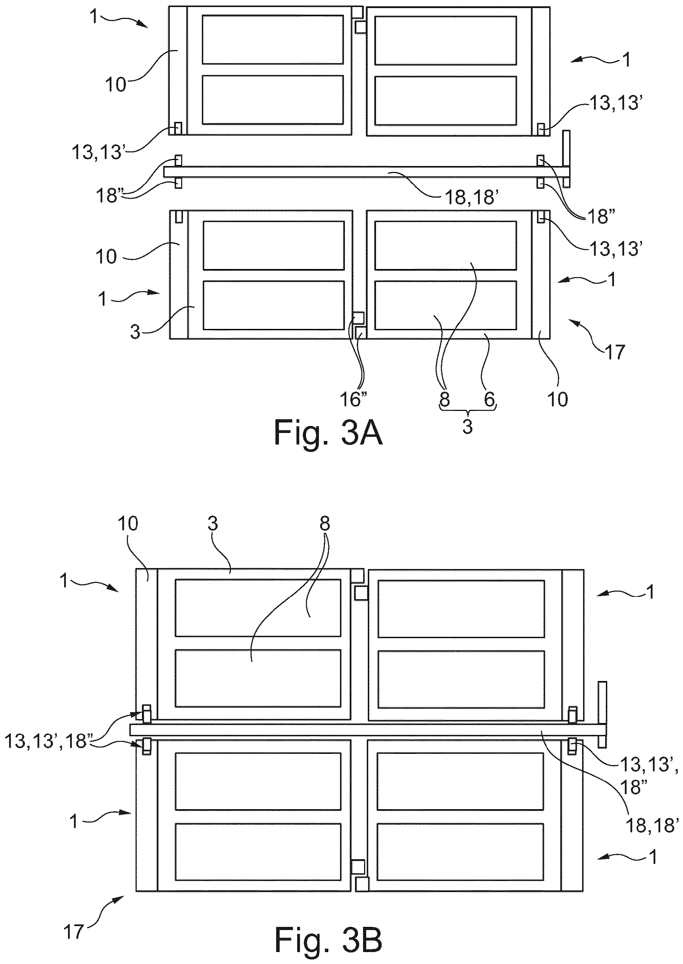

L'invention a également pour objet comme illustré à titre d'exemples sur les figures 3A, 3B et 11 à 14, un dispositif 17 de refroidissement pour batterie 2' comprenant une pluralité de cellules, préférentiellement regroupées en modules 2, ledit dispositif 17 présentant une pluralité de sites de réception 1' contrôlés en température, sur lesquels reposent les cellules, ces sites 1' étant tous reliés à des conduits d'alimentation et d'évacuation 18, 18' pouvant être raccordés à un circuit de circulation de fluide caloporteur FC.

Ce dispositif 17 est caractérisé en ce qu'il présente une construction modulaire et comprend au moins deux modules de refroidissement (1) tels que décrits ci-dessus.

Avantageusement, et comme le montrent les figures précitées, ce dispositif 17 comprend quatre modules de refroidissement 1 arrangés en deux colonnes et deux rangées de deux, de telle manière que les formations proéminentes 10 de deux modules 1 soient à chaque fois coplanaires et que les ports 13, 13' d'entrée et de sortie de leurs portions de conduit(s) respectives 11 et 11' soient situés mutuellement en regard, les deux couples de formations proéminentes 10 alignées des deux paires de modules 1 étant situés au niveau de côtés mutuellement opposés dudit arrangement de modules 1.

Préférentiellement, les conduits d'alimentation et d'évacuation 18 et 18' relient les portions de conduit(s) 11, 11' d'amenée et d'évacuation des différents modules de refroidissement 1 entre elles et à un circuit de circulation de fluide caloporteur extérieur (non représenté), en formant une ligne l'alimentation et une ligne d'évacuation, chaque conduit 18, 18' étant équipé d'embouts de raccordement 18" venant en prise étanche dans les ports d'entrée et de sortie 13, 13' des différents modules de refroidissement 1, par exemple par emboîtement. Des moyens de raccordement (embouts 18'" ou autres) pour relier ces conduits 18, 18' au circuit extérieur (non représenté) sont bien entendu également prévus.

Afin de pouvoir rattraper les dispersions de fabrication et de montage, et éventuellement de possibles déformations mécaniques ou dilatations thermiques, sans compromettre l'étanchéité des lignes de circulation de liquide caloporteur FC, le conduit d'alimentation et/ou le conduit d'évacuation 18, 18', préférentiellement chacun des deux, est constitué de deux parties de conduits 22 alignées et reliées par une liaison 22' coulissante axialement et étanche, par exemple équipée d'au moins un joint torique (cf. figures 12C et 15B).

Un arrangement des modules de refroidissement 1 pour former un dispositif de refroidissement 17 comme représenté sur les figures 11, 12 et 14, permet d'enfermer les cellules et modules 2 de batterie dans une structure de maintien dans le boîtier 20 (bac inférieur) et d'isolation (thermique, physique) par rapport à ce dernier, comme le montrent les figures 11 à 15, tout en autorisant avec un élément de base standard (module 1 - décliné par exemple en deux variantes avec des inclinaisons différentes des bords supérieurs des formations 10) une modularité constructive avec une flexibilité d'adaptation en termes de taille et de configuration.

Bien entendu, une unité de batterie peut ne comporter qu'un seul dispositif de refroidissement 17. Toutefois, pour des tailles de batterie importantes, avec un grand nombre de modules 2, le cas échéant arrangés de manière étagée, plusieurs dispositifs de refroidissement séparés peuvent être prévus, lesquels peuvent être reliés fluidiquement entre eux.

Dans ce cas, l'un au moins des conduits 18, 18' d'alimentation et/ou d'évacuation, préférentiellement les deux, est(sont) pourvu(s) d'un embout 23 de connexion à un circuit de circulation annexe, le cas échéant à un autre dispositif de refroidissement 17.

L'invention vise également une unité de batterie 2' gérée en température, comprenant des cellules regroupées en une pluralité de modules de batterie 2 et un boîtier de protection 20 (seul son bac inférieur est représenté, lequel est fermé par un couvercle supérieur non représenté).

Cette unité de batterie est caractérisée en ce qu'elle comprend également au moins un dispositif de refroidissement 17 tel que décrit ci-dessus, monté dans le boîtier 20 et présentant une pluralité de modules de refroidissement 1, préférentiellement quatre, avantageusement reliés mécaniquement et fluidiquement entre eux, et fournissant une pluralité de sites de réception 1' pour lesdits modules de batterie 2.

Le boîtier 20 peut notamment comporter un bac étanche (cf. figures 15A et 15B) permettant de contenir les fuites éventuelles de liquide caloporteur FC, tout en présentant des passages (le cas échéant étanchéifiés) pour le raccordement des lignes de circulation de fluide aux conduits 18, 18', préférentiellement au niveau d'une paroi latérale du bac du boîtier 20, à distance du fond.

Enfin, l'invention porte aussi sur un véhicule automobile, notamment électrique ou hybride, caractérisé en ce qu'il comprend au moins une unité de batterie 2' du type mentionné ci-dessus, dont le ou chaque dispositif de refroidissement 17 est relié au circuit de refroidissement moteur dudit véhicule.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention, telle que définie dans les revendications.

## Revendications

1. Module de refroidissement (1) pour cellules ou module(s) (2) de batterie électrique (2'), en particulier de batterie de véhicule hybride ou électrique, comprenant un corps principal (3) sous forme de plaque composite préférentiellement de forme rectangulaire et intégrant au moins un circuit (4) pour la circulation d'un fluide caloporteur (FC) avec une entrée (5) et une sortie (5') de fluide, cette plaque composite (3) comprenant une plaque de base (6) en un matériau rigide à faible conductivité thermique, dans laquelle sont ménagés un réseau de canaux (7), et au moins une plaque de recouvrement (8) en une matière à conductivité thermique élevée, qui est rapportée sur la plaque de base (6) avec réalisation d'une étanchéité au moins périphérique (9), qui forme par coopération avec les canaux (7) de la plaque de base (6) le ou les conduit(s) (4) ou segments de conduit(s) (4') du ou des circuit(s) et qui est destinée à venir en contact surfacique avec des cellules ou au moins un module (2) de la batterie (2') à refroidir, chaque ensemble plaque de recouvrement (8) et circuit de conduit(s) (4) formant un site de réception (1') contrôlé en température, module (1) **caractérisé en ce qu'**il comprend également, le long de l'un des côtés latéraux (3') de la plaque composite (3), une formation (10) qui est proéminente et inclinée par rapport à ladite plaque composite (3), qui intègre des portions de conduit(s) d'amenée et d'évacuation (11, 11') reliées respectivement à l'entrée (5) et à la sortie (5') de fluide du ou de chacun des circuit(s) de conduit(s) (4) de la plaque composite (3), qui est réalisée en une matière à faible conductivité thermique, et dont au moins une partie, préférentiellement une partie majeure (12) comprenant des canaux (11") correspondant aux portions de conduit(s) d'amenée (11) et d'évacuation (11'), est réalisée d'un seul tenant avec la plaque de base (6) du corps principal (3).

2. Module selon la revendication 1, **caractérisé en ce que** la formation proéminente (10) se présente sous la forme d'une portion de plaque s'étendant perpendiculairement au plan médian (PM) de la plaque composite (3) et prolongeant continûment un bord latéral (6') de la plaque de base (6), préférentiellement un bord correspondant à une largeur du rectangle formé par la plaque composite (3).

3. Module selon la revendication 1 ou 2, **caractérisé en ce que** la formation proéminente (10) est pourvue, au niveau des extrémités des portions de conduit(s) d'amenée et d'évacuation (11, 11'), qui sont situées à l'opposé de leurs extrémités communiquant avec l'entrée (5) et la sortie (5') de fluide du ou de chaque circuit de conduit(s) (4) intégré à la plaque composite (3), de ports ou d'embouts d'alimentation et d'évacuation (13, 13') décalés par rapport au plan médian (PM) de la plaque composite (3), situés avantageusement à distance au-dessus de la plaque de recouvrement (8) concernée et débouchant latéralement de ladite formation (10), par exemple d'une tranche latérale de cette dernière.

4. Module selon l'une quelconque des revendications 1 à 3, **caractérisé en ce que** la formation proéminente (10) intégrant des portions de conduit(s) d'amenée (11) et d'évacuation (11') et ayant une constitution d'ensemble en forme de portion de plaque, présente une structure composite et comprend un corps de base (12) dans lequel sont ménagés des canaux (11") correspondant aux portions de conduit(s) d'amenée (11) et d'évacuation (11') et une plaque complémentaire (12') délimitant par coopération avec lesdits canaux (11") lesdites portions de conduit(s) (11 et 1 1 '), les embouts ou ports d'entrée (13) et de sortie (13') de ces dernières débouchant latéralement au niveau d'une tranche de ladite portion de plaque (10).

5. Module selon l'une quelconque des revendications 1 à 4, **caractérisé en ce que** chaque circuit (4) de conduit(s) de circulation de fluide caloporteur associé à une plaque de recouvrement (8) thermiquement conductrice est composé de segments de conduit plats (4') reliés fluidiquement en série pour constituer un arrangement en forme de serpentin entre l'entrée (5) et la sortie (5') du circuit (4), l'ensemble des segments de conduit (4') du circuit (4) formant un espace de circulation surfacique et aplati en forme de lame entre les plaques de base (6) et de recouvrement (8), avec une extension surfacique continue à l'exception des parois de compartimentation (4") définissant le chemin de circulation fluidique dans le circuit (4) considéré.

6. Module selon l'une quelconque des revendications 1 à 5, **caractérisé en ce que** la ou chaque plaque de recouvrement (8) est solidarisée au moins périphériquement, de manière continue ou non, par l'intermédiaire d'une liaison (14) matière, adhésive ou mécanique ou encore par soudure, à la plaque de base (6), avec réalisation d'une étanchéité aux liquides continue (9) autour du circuit de conduit(s) (4) associé à la plaque de recouvrement (8) considérée, par exemple par mise en place d'un joint de compression (9) entre cette dernière et la plaque de base (6).

7. Module selon la revendication 6, **caractérisé en ce que** la ou chaque plaque de recouvrement (8) comporte un bord (8') formant cadre périphérique, d'un seul tenant ou rapporté, notamment par surmoulage, et qui est solidarisé avec la plaque de base (6), ledit bord (8') étant réalisé avantageusement en un matériau autorisant un soudage avec ladite plaque de base (6), la plaque de recouvrement (8) considérée étant le cas échéant également solidarisée avec la plaque de base (6) en au moins un endroit à l'intérieur du cadre (8'), par exemple au niveau d'une paroi de compartimentation (4") de ladite plaque de base (6).

8. Module selon l'une quelconque des revendications 1 à 7, **caractérisé en ce qu'**un chemin de fuite (15) est associé à chaque site de réception (1'), ledit chemin de fuite (15) comprenant une rainure ou un canal collecteur(trice) (15') à extension circonférentielle périphérique et au moins un passage d'évacuation (15") débouchant sur la face de la plaque de base (6) opposée à la plaque de recouvrement (8).

9. Module selon les revendications 6 et 8, **caractérisé en ce que** le canal ou la rainure (15") s'étend entre l'étanchéité (9) et la liaison (14) périphérique existant entre les plaques de base (6) et de recouvrement (8), le chemin de fuite (15) étant préférentiellement formé et situé entièrement dans la plaque de base (6).

10. Module selon l'une quelconque des revendications 1 à 9, **caractérisé en ce qu'**il comprend une unique plaque de recouvrement (8) et un unique circuit de conduits de circulation fluidique (4), formant ensemble un unique site de réception (1') contrôlé en température, sur lequel est destiné à venir en appui un ou plusieurs module(s) de batterie (2).

11. Module selon l'une quelconque des revendications 1 à 9, **caractérisé en ce qu'**il comporte au moins deux sites de réception distincts (1') contrôlés en température, chaque site (1') comprenant une plaque de recouvrement (8) et un circuit de conduits de circulation fluidique (4) associé, les différents circuits (4) étant soit reliés fluidiquement en série et ensemble à une unique paire de portions de conduits d'amenée (11) et d'évacuation (11'), soit reliés chacun séparément et indépendamment à une paire propre de portions de conduits d'amenée (11) et d'évacuation (11').

12. Module selon l'une quelconque des revendications 1 à 11, **caractérisé en ce que** la plaque de base (6) est pourvue de sites de fixation (16), tels que par exemple des perçages, des oeillets ou analogues, ménagés dans le corps de ladite plaque (6) ou dans des pattes (16') saillantes latéralement, et le cas échéant de moyens (16") d'accouplement mécanique avec au moins un autre module (1) et/ou de formations de rigidification (6") sur sa face inférieure opposée à la ou aux plaque(s) de recouvrement (8).

13. Module selon la revendication 4, **caractérisé en ce que** la plaque de base (6) et le corps de base (12) consistent en une pièce monobloc (19) moulée en matière thermoplastique, la ou chaque plaque de recouvrement (8) consistant en une plaque métallique, préférentiellement en aluminium.

14. Module selon l'une quelconque des revendications 1 à 13, **caractérisé en ce que** la formation proéminente (10), préférentiellement sous forme de plaque ou de paroi verticale, comporte ou est pourvue d'une platine (21), configurée pour supporter une carte électronique (21'), faisant par exemple partie d'un système de gestion de la batterie (2'), un câble de raccordement électrique (21") ou analogue.

15. Dispositif (17) de refroidissement pour batterie (2') comprenant une pluralité de cellules, préférentiellement regroupées en modules (2), ledit dispositif (17) présentant une pluralité de sites de réception (1') contrôlés en température, sur lesquels reposent les cellules, ces sites (1') étant tous reliés à des conduits d'alimentation et d'évacuation (18, 18') pouvant être raccordés à un circuit de circulation de fluide caloporteur (FC), dispositif (17) **caractérisé en ce qu'**il présente une construction modulaire et comprend au moins deux modules de refroidissement (1) selon l'une quelconque des revendications 1 à 14.

16. Dispositif de refroidissement selon la revendication 15, **caractérisé en ce qu'**il comprend quatre modules de refroidissement (1) arrangés en deux colonnes et deux rangées de deux, de telle manière que les formations proéminentes (10) de deux modules (1) soient à chaque fois coplanaires et que les ports (13, 13') d'entrée et de sortie de leurs portions de conduit(s) respectives (11 et 11') soient situés mutuellement en regard, les deux couples de formations proéminentes (10) alignées des deux paires de modules (1) étant situés au niveau de côtés mutuellement opposés dudit arrangement de modules (1).

17. Dispositif de refroidissement selon l'une quelconque des revendications 15 et 16, **caractérisé en ce que** les conduits d'alimentation et d'évacuation (18 et 18') relient les portions de conduit(s) (11, 11') d'amenée et d'évacuation des différents modules de refroidissement (1) entre elles et à un circuit de circulation de fluide caloporteur extérieur, en formant une ligne l'alimentation et une ligne d'évacuation, chaque conduit (18, 18') étant équipé d'embouts de raccordement (18") venant en prise étanche dans les ports d'entrée et de sortie (13, 13') des différents modules de refroidissement (1), par exemple par emboîtement.

18. Dispositif de refroidissement selon l'une quelconque des revendications 15 à 17, **caractérisé en ce que** le conduit d'alimentation et/ou le conduit d'évacuation (18, 18'), préférentiellement chacun des deux, est constitué de deux parties de conduits (22) alignées et reliées par une liaison (22') coulissante axialement et étanche, par exemple équipée d'au moins un joint torique.

19. Dispositif de refroidissement selon l'une quelconque des revendications 15 à 18, **caractérisé en ce que** l'un au moins des conduits (18, 18') d'alimentation et/ou d'évacuation, préférentiellement les deux, est(sont) pourvu(s) d'un embout (23) de connexion à un circuit de circulation annexe, le cas échéant à un autre dispositif de refroidissement (17).

20. Unité de batterie (2') gérée en température, comprenant des cellules regroupées en une pluralité de modules de batterie (2) et un boîtier de protection (20),
unité **caractérisée en ce qu'**elle comprend également au moins un dispositif de refroidissement (17) selon l'une quelconque des revendications 15 à 19, monté dans le boîtier (20) et présentant une pluralité de modules de refroidissement (1), préférentiellement quatre, avantageusement reliés mécaniquement et fluidiquement entre eux, et fournissant une pluralité de sites de réception (1') pour lesdits modules de batterie (2).

21. Véhicule automobile, notamment électrique ou hybride, **caractérisé en ce qu'**il comprend au moins une unité de batterie (2') selon la revendication 20, dont le ou chaque dispositif de refroidissement (17) est relié au circuit de refroidissement moteur dudit véhicule.

## Patentansprüche

1. Kühlmodul (1) für Zellen oder Modul (e) (2) einer elektrischen Batterie (2'), insbesondere einer Batterie eines Hybrid- oder Elektrofahrzeugs, umfassend eine Hauptkörper (3) in Form einer Verbundplatte, die vorzugsweise rechteckig geformt ist und wenigstens einen Kreislauf (4) für die Zirkulation eines Wärmeübertragungsfluids (FC) mit einem Fluidein- (5) und -auslass (5') enthält, wobei diese Verbundplatte (3) eine Grundplatte (6) aus einem starren Material mit geringer Wärmeleitfähigkeit, in der ein Netz aus Kanälen (7) ausgebildet ist, und wenigstens eine Abdeckplatte (8) aus einem Material mit erhöhter Wärmeleitfähigkeit umfasst, die auf die Grundplatte (6) aufgesetzt ist, unter Herstellung einer Abdichtung wenigstens am Umfang (9), die durch Zusammenwirkung mit den Kanälen (7) der Grundplatte (6) die Leitung(en) (4) oder Leitungssegmente (4') des Kreislaufs oder der Kreisläufe bildet, und die dazu bestimmt ist, mit Zellen oder wenigstens einem Modul (2) der zu kühlenden Batterie (2') in Oberflächenkontakt zu treten, wobei jede Einheit aus Abdeckplatte (8) und Leitungskreislauf eine temperaturgesteuerte Aufnahmestelle (1') bildet,
wobei das Modul (1) **dadurch gekennzeichnet ist, dass** es ebenfalls entlang einer der Seitenflächen (3') der Verbundplatte (3) ein Gebilde (10) umfasst, das im Verhältnis zur Verbundplatte (3) vorsteht und geneigt ist, das Zu- und Ablaufleitungsabschnitte (11, 11') enthält, die jeweils mit dem Fluidein- (5) und -auslass (5') des Kreislaufs oder jedes der Kreisläufe von Leitung(en) (4) der Verbundplatte (3) verbunden sind, das aus einem Material mit geringer Wärmeleitfähigkeit hergestellt ist, und wovon wenigstens ein Abschnitt, vorzugsweise ein bedeutender Abschnitt (12), der Kanäle (11") umfasst, die den Zu- (11) und Ablaufleitungsabschnitten (11') entsprechen, mit der Grundplatte (6) des Hauptkörpers (3) einstückig ausgebildet ist.

2. Modul nach Anspruch 1, **dadurch gekennzeichnet, dass** das vorstehende Gebilde (10) in Form eines Plattenabschnitts vorliegt, der sich senkrecht zur Mittelebene (PM) der Verbundplatte (3) erstreckt und eine Seitenkante (6') der Grundplatte (6), vorzugsweise eine Kante, die einer Breite des Rechtecks entspricht, das von der Verbundplatte (3) gebildet ist, durchgehend verlängert.

3. Modul nach Anspruch 1 oder 2, **dadurch gekennzeichnet, dass** das vorstehende Gebilde (10) an den Enden der Zu- und Ablaufleitungsabschnitte (11, 11'), die sich gegenüber von ihren Enden befinden, die mit dem Fluidein-(5) und -auslass (5') des oder jedes Kreislaufs von Leitung(en) (4) in Verbindung stehen, der in die Verbundplatte (3) integriert ist, mit Ports oder Ansatzstücken zur Versorgung und zum Ablauf (13, 13') versehen ist, die im Verhältnis zur Mittelebene (PM) der Verbundplatte (3) versetzt sind, die sich vorteilhafterweise in einem Abstand über der betreffenden Abdeckplatte (8) befinden und seitlich von dem Gebilde (10) münden, zum Beispiel von einer Seitenkante desselben.

4. Modul nach einem der Ansprüche 1 bis 3, **dadurch gekennzeichnet, dass** das vorstehende Gebilde (10), das Zu- (11) und Ablaufleitungsabschnitte (11') enthält und eine plattenabschnittförmige Gesamtbeschaffenheit aufweist, eine Verbundstruktur aufweist und einen Grundkörper (12), in dem Kanäle (11") ausgebildet sind, die den Zu- (11) und Ablaufleitungsabschnitten (11') entsprechen, und eine ergänzende Platte (12') umfasst, die durch Zusammenwirkung mit den Kanälen (11") die Leitungsabschnitte (11 und 11') begrenzt, wobei die Ansatzstücke oder Ports zum Ein- (13) und Auslass (13') derselben seitlich an einer Kante des Plattenabschnitts (10) münden.

5. Modul nach einem der Ansprüche 1 bis 4, **dadurch gekennzeichnet, dass** jeder Leitungskreislauf (4) zur Zirkulation von Wärmeübertragungsfluid, der einer wärmeleitenden Abdeckplatte (8) zugeordnet ist, aus flachen Leitungssegmenten (4') zusammengesetzt ist, die in Reihe fluidisch verbunden sind, um eine serpentinenförmige Anordnung zwischen dem Einlass (5) und dem Auslass (5') des Kreislaufs (4) zu bilden, wobei sämtliche Leitungssegmente (4') des Kreislaufs (4) einen flächigen und abgeflachten Zirkulationsraum in Form eines Blatts zwischen der Grund- (6) und der Abdeckplatte (8) bilden, mit einer durchgehenden Flächenerstreckung mit Ausnahme der Trennwände (4"), die den Fluidzirkulationsweg im betreffenden Kreislauf (4) definieren.

6. Modul nach einem der Ansprüche 1 bis 5, **dadurch gekennzeichnet, dass** die oder jede Abdeckplatte (8) wenigstens am Umfang, durchgehend oder nicht, mittels einer stoffschlüssigen, Haft- oder mechanischen oder auch Schweißverbindung (14) fest mit der Grundplatte (6) verbunden ist, mit Herstellung einer durchgehenden Flüssigkeitsabdichtung (9) um den Leitungskreislauf (4), der der betreffenden Abdeckplatte (8) zugeordnet ist, zum Beispiel durch Einsatz einer Kompressionsdichtung (9) zwischen dieser und der Grundplatte (6).

7. Modul nach Anspruch 6, **dadurch gekennzeichnet, dass** die oder jede Abdeckplatte (8) einen Rand (8') aufweist, der einen umlaufenden Rahmen bildet, der einstückig ausgebildet oder angesetzt ist, insbesondere durch Anspritzen, und der fest mit der Grundplatte (6) verbunden ist, wobei der Rand (8') vorteilhafterweise aus einem Material hergestellt ist, das eine Verschweißung mit der Grundplatte (6) gestattet, wobei die Abdeckplatte (8) gegebenenfalls ebenfalls an wenigstens einer Stelle im Inneren des Rahmens (8') fest mit der Grundplatte (6) verbunden ist, zum Beispiel an einer Trennwand (4") der Grundplatte (6).

8. Modul nach einem der Ansprüche 1 bis 7, **dadurch gekennzeichnet, dass** ein Leckageweg (15) jeder Aufnahmestelle (1') zugeordnet ist, wobei der Leckageweg (15) eine Sammelrille oder einen Sammelkanal (15') mit umlaufender Umfangserstreckung und wenigstens einen Ablaufdurchlass (15") umfasst, der auf der Seite der Grundplatte (6) mündet, die der Abdeckplatte (8) gegenüberliegt.

9. Modul nach den Ansprüchen 6 und 8, **dadurch gekennzeichnet, dass** sich der Kanal oder die Rille (15") zwischen der Abdichtung (9) und der Umfangsverbindung (14) erstreckt, die zwischen der Grund- (6) und der Abdeckplatte (8) besteht, wobei der Leckageweg (15) vorzugsweise vollständig in der Grundplatte (6) ausgebildet und angeordnet ist.

10. Modul nach einem der Ansprüche 1 bis 9, **dadurch gekennzeichnet, dass** es eine einzelne Abdeckplatte (8) und einen einzelnen fluidischen Zirkulationsleitungskreislauf (4) umfasst, die zusammen eine einzelne temperaturgesteuerte Aufnahmestelle (1') bilden, auf der ein oder mehrere Batteriemodul(e) (2) aufliegen soll.

11. Modul nach einem der Ansprüche 1 bis 9, **dadurch gekennzeichnet, dass** es wenigstens zwei gesonderte temperaturgesteuerte Aufnahmestellen (1') aufweist, wobei jede Stelle (1') eine Abdeckplatte (8) und einen zugeordneten fluidischen Zirkulationsleitungskreislauf (4) umfasst, wobei die verschiedenen Kreisläufe (4) entweder fluidisch in Reihe und zusammen mit einem einzelnen Paar von Zu- (11) und Ablaufleitungsabschnitten (11') verbunden sind oder jeweils getrennt und unabhängig mit einem eigenen Paar von Zu- (11) und Ablaufleitungsabschnitten (11') verbunden sind.

12. Modul nach einem der Ansprüche 1 bis 11, **dadurch gekennzeichnet, dass** die Grundplatte (6) mit Befestigungsstellen (16), wie zum Beispiel Bohrungen, Ösen oder Ähnlichem, die im Körper der Platte (6) oder in seitlich hervorstehenden Laschen (16') ausgebildet sind, und gegebenenfalls mit Mitteln (16") zur mechanischen Kopplung mit wenigstens einem anderen Modul (1) und/oder Versteifungsgebilden (6") auf ihrer Unterseite gegenüber der oder den Abdeckplatte(n) (8) versehen ist.

13. Modul nach Anspruch 4, **dadurch gekennzeichnet, dass** die Grundplatte (6) und der Grundkörper (12) aus einem einstückigen Teil (19) bestehen, das aus thermoplastischem Material geformt ist, wobei die oder jede Abdeckplatte (8) aus einer Metallplatte besteht, vorzugsweise aus Aluminium.

14. Modul nach einem der Ansprüche 1 bis 13, **dadurch gekennzeichnet, dass** das vorstehende Gebilde (10), vorzugsweise in Form einer vertikalen Platte oder Wand, eine Trägerplatte (21) umfasst oder damit versehen ist, die dazu ausgebildet ist, eine Leiterplatte (21'), die zum Beispiel Teil eines Systems zur Verwaltung der Batterie (2') ist, ein elektrisches Anschlusskabel (21") oder Ähnliches zu tragen.

15. Kühlvorrichtung (17) für eine Batterie (2'), die eine Mehrzahl von Zellen umfasst, die vorzugsweise zu Modulen (2) gruppiert sind, wobei die Vorrichtung (17) eine Mehrzahl von temperaturgesteuerten Aufnahmestellen (1') aufweist, auf denen die Zellen aufliegen, wobei diese Stellen (1') alle mit Versorgungs- und Ablaufleitungen (18, 18') verbunden sind, die an einen Kreislauf zur Zirkulation von Wärmeübertragungsfluid (FC) angeschlossen werden können, wobei die Vorrichtung (17) **dadurch gekennzeichnet ist, dass** sie einen modularen Aufbau aufweist und wenigstens zwei Kühlmodule (1) nach einem der Ansprüche 1 bis 14 umfasst.

16. Kühlvorrichtung nach Anspruch 15, **dadurch gekennzeichnet, dass** sie vier Kühlmodule (1) umfasst, die in zwei Spalten und zwei Zweierreihen angeordnet sind, so dass die vorstehenden Gebilde (10) zweier Module (1) jedes Mal komplanar sind und die Ein- und Auslassports (13, 13') ihrer jeweiligen Leitungsabschnitte (11 und 11') einander zugewandt sind, wobei sich die zwei Paare von in Reihe angeordneten vorstehenden Gebilden (10) der zwei Paare von Modulen (1) an einander gegenüberliegen Seiten der Anordnung von Modulen (1) befinden.

17. Kühlvorrichtung nach einem der Ansprüche 15 und 16, **dadurch gekennzeichnet, dass** die Versorgungs- und Ablaufleitungen (18 und 18') die Zu- und Ablaufleitungsabschnitte (11, 11') der verschiedenen Kühlmodule (1) miteinander und mit einem externen Wärmeübertragungsfluid-Zirkulationskreislauf verbinden, wobei eine Versorgungsleitung und eine Ablaufleitung gebildet wird, wobei jede Leitung (18, 18') mit Anschlussstücken (18") ausgestattet ist, die in den Ein- und Auslassports (13, 13') der verschiedenen Kühlmodule (1) dicht in Eingriff stehen, zum Beispiel durch Stecken.

18. Kühlvorrichtung nach einem der Ansprüche 15 bis 17, **dadurch gekennzeichnet, dass** die Versorgungsleitung und/oder die Ablaufleitung (18, 18'), vorzugsweise jede der beiden, von zwei Leitungsabschnitten (22) gebildet ist, die in Reihe angeordnet und durch eine axial gleitende und dichte Verbindung (22') verbunden sind, die zum Beispiel mit wenigstens einer Ringdichtung ausgestattet ist.

19. Kühlvorrichtung nach einem der Ansprüche 15 bis 18, **dadurch gekennzeichnet, dass** wenigstens eine von der Versorgungs- und/oder Ablaufleitung (18, 18'), vorzugsweise beide, mit einem Ansatzstück (23) zum Anschluss an einen Nebenzirkulationskreislauf, gegebenenfalls an eine andere Kühlvorrichtung (17), versehen ist bzw. sind.

20. Temperaturgesteuerte Batterieeinheit (2'), die Zellen, die zu einer Mehrzahl von Batteriemodulen (2) gruppiert sind, und ein Schutzgehäuse (20) umfasst, wobei die Einheit **dadurch gekennzeichnet ist, dass** sie ebenfalls wenigstens eine Kühlvorrichtung (17) nach einem der Ansprüche 15 bis 19 umfasst, die im Gehäuse (20) angebracht ist und eine Mehrzahl von Kühlmodulen (1) aufweist, vorzugsweise vier, die vorteilhafterweise mechanisch und fluidisch miteinander verbunden sind und eine Mehrzahl von Aufnahmestellen (1') für die Batteriemodule (2) bereitstellen.

21. Kraftfahrzeug, insbesondere Elektro- oder Hybrid-Kraftfahrzeug, **dadurch gekennzeichnet, dass** es wenigstens eine Batterieeinheit (2') nach Anspruch 20 umfasst, von welcher eine oder jede Kühlvorrichtung (17) mit dem Motor-Kühlkreislauf des Fahrzeugs verbunden ist.

## Claims

1. Cooling module (1) for cells or module (s) (2) of an electric battery (2'), in particular a hybrid or electric vehicle battery, comprising a main body (3) in the form of a composite plate, preferably of rectangular shape and integrating at least one circuit (4) for the circulation of a heat transfer fluid (FC) with a fluid inlet (5) and a fluid outlet (5'), this composite plate (3) comprising a baseplate (6) made of a rigid material with low thermal conductivity, in which is formed an array of channels (7), and at least one covering plate (8) made of a material with high thermal conductivity, which is mounted on the baseplate (6) and forms an at least peripheral seal (9), which through cooperation with the channels (7) of the baseplate (6), forms the duct or ducts (4) or duct segment (s) (4') of the circuit (s) and is intended to come into surface contact with cells or at least one module (2) of the battery (2') to be cooled, each covering plate (8) and circuit of duct(s) (4) assembly forming a temperature-controlled reception site (1'),
module (1) **characterized in that** it also comprises, along one of the lateral sides (3') of the composite plate (3), a protruding formation (10) that is inclined relative to said composite plate (3), which integrates feed and evacuation duct portions (11, 11') respectively connected to the fluid inlet (5) and to the fluid outlet (5') of the or each of the circuits of duct(s) (4) of the composite plate (3), which is made of a material with low thermal conductivity, and at least one part of which, preferably a major part (12) including channels (11") corresponding to the feed (11) and evacuation (11') duct portions, and is produced in one piece with the baseplate (6) of the main body (3).

2. Module according to Claim 1, **characterized in that** the protruding formation (10) takes the form of a plate portion extending perpendicularly to the median plane (PM) of the composite plate (3) and extending in continuity therewith a lateral edge (6') of the baseplate (6), preferably an edge corresponding to a width of the rectangle formed by the composite plate (3) .

3. Module according to Claim 1 or 2, **characterized in that** the protruding formation (10) is provided, at the level of the ends of the feed and evacuation duct portions (11, 11'), which are situated opposite their ends communicating with the fluid inlet (5) and the fluid outlet (5') of the or each circuit of duct(s) (4) integrated in the composite plate (3), feed and evacuation ports or connectors (13, 13') offset relative to the median plane (PM) of the composite plate (3), advantageously situated at a distance above the covering plate (8) concerned and discharging laterally from said formation (10), for example from a lateral edge surface of the latter.

4. Module according to any one of Claims 1 to 3, **characterized in that** the protruding formation (10) integrating feed duct portions (11) and evacuation duct portions (11') and having an overall constitution in the form of a plate portion has a composite structure and comprises a base body (12) in which are formed channels (11") corresponding to the feed duct portions (11) and evacuation duct portions (11') and a complementary plate (12') delimiting through cooperation with said channels (11") said duct portions (11 and 11'), the inlet connectors or ports (13) and outlet connectors or ports (13') of the latter discharging laterally at the level of an edge surface of said plate portion (10).

5. Module according to any one of Claims 1 to 4, **characterized in that** each circuit (4) of heat transfer fluid circulation duct(s) associated with a thermally conducting covering plate (8) is composed of flat duct segments (4') fluidically connected in series to constitute an arrangement of serpentine shape between the inlet (5) and the outlet (5') of the circuit (4), the set of duct segments (4') of the circuit (4) forming a flattened surface circulation space in the form of a flat blade between the baseplate (6) and covering plate (8), with a surface extent that is continuous with the exception of compartmentalization walls (4") defining the fluidic circulation path in the circuit (4) concerned.

6. Module according to any one of Claims 1 to 5, **characterized in that** the or each covering plate (8) is fastened at least peripherally, continuously or not, by means of a material, adhesive or mechanical connection (14) or by welding to the baseplate (6) with a continuous liquid seal (9) produced around the duct circuit (4) associated with the covering plate (8) concerned, for example by placing a compression seal (9) between the latter and the baseplate (6).

7. Module according to Claim 6, **characterized in that** the or each covering plate (8) includes an edge (8') forming a peripheral frame, in one piece or attached, in particular by overmolding, that is fastened to the baseplate (6), said edge (8') being advantageously made of a material allowing welding to said baseplate (6), the covering plate (8) concerned being where appropriate also fastened to the baseplate (6) at at least one location inside the frame (8'), for example at the level of a compartmentalization wall (4") of said baseplate (6).

8. Module according to any one of Claims 1 to 7, **characterized in that** a leakage path (15) is associated with each receiving site (1'), said leakage path (15) including a collector groove or channel (15') with peripheral circumferential extent and at least one evacuation passage (15") discharging onto the face of the baseplate (6) opposite the covering plate (8).

9. Module according to Claims 6 and 8, **characterized in that** the channel or groove (15") extends between the seal (9) and the peripheral connection (14) existing between the baseplate (6) and the covering plate (8), the leakage path (15) preferably being formed and situated entirely in the baseplate (6).

10. Module according to any one of Claims 1 to 9, **characterized in that** it comprises a single covering plate (8) and a single fluidic circulation duct circuit (4) together forming a single temperature-controlled receiving site (1') on which are intended to come to bear one or more battery modules (2).

11. Module according to any one of Claims 1 to 9, **characterized in that** it includes at least two distinct temperature-controlled receiving sites (1'), each site (1') comprising a covering plate (8) and an associated fluidic circulation duct circuit (4), the various circuits (4) being either connected fluidically in series and together to a single pair of feed duct portions (11) and evacuation duct portions (11') or each connected separately and independently to its own pair of feed duct portions (11) and evacuation duct portions (11').

12. Module according to any one of Claims 1 to 11, **characterized in that** the baseplate (6) is provided with fixing sites (16), such as for example drilled holes, eyelets or the like, formed in the body of said plate (6) or in laterally projecting lugs (16'), and where applicable with mechanical coupling means (16") to at least one other module (1) and/or stiffener formations (6") on its lower face opposite the covering plate or plates (8).

13. Module according to Claim 4, **characterized in that** the baseplate (6) and the base body (12) consist in a monobloc part (19) molded from thermoplastic material, the or each covering plate (8) consisting in a metal, preferably aluminum, plate.

14. Module according to any one of Claims 1 to 13, **characterized in that** the protruding formation (10), preferably in the form of a vertical wall or plate, includes or is provided with a plate (21) configured to support an electronic circuit card (21') forming for example part of a management system of the battery (2'), an electric connection cable (21") or the like.

15. Cooling device (17) for a battery (2') comprising a plurality of cells, preferably grouped in modules (2), said device (17) including a plurality of temperature-controlled receiving sites (1') on which the cells rest, these sites (1') being all connected to feed and evacuation ducts (18, 18') that can be connected to a heat transfer fluid (FC) circulation circuit,
device (17) **characterized in that** it has a modular structure and comprises at least two cooling modules (1) according to any one of Claims 1 to 14.

16. Cooling device according to Claim 15, **characterized in that** it comprises four cooling modules (1) arranged in two columns and two rows of two, in such a manner that the protruding formations (10) of two modules (1) are in each case coplanar and the inlet and outlet ports (13, 13') of their respective duct portions (11 and 11') are situated facing one another, the two pairs of aligned protruding formations (10) of the two pairs of modules (1) being situated at the level of sides of said arrangement of modules (1) facing one another.

17. Cooling device according to either one of Claims 15 or 16, **characterized in that** the feed and evacuation ducts (18 and 18') connect the feed and evacuation duct portions (11, 11') of the various cooling modules (1) to one another and to an external heat transfer fluid circulation circuit, forming a feed line and an evacuation line, each duct (18, 18') being equipped with connectors (18") coming to engage in sealed manner in the inlet and outlet ports (13, 13') of the various cooling modules (1), for example by nesting therein.

18. Cooling device according to any one of Claims 15 to 17, **characterized in that** the feed duct and/or the evacuation duct (18, 18'), preferably each of the two, is constituted of two duct parts (22) aligned and connected by a sealed axially sliding connection (22'), for example equipped with at least one O-ring.

19. Cooling device according to any one of Claims 15 to 18, **characterized in that** at least one of the feed and/or evacuation ducts (18, 18'), preferably both, is (are) provided with a connector (23) for connection to an ancillary circulation circuit, where appropriate to another cooling device (17).

20. Temperature-controlled battery unit (2') comprising cells grouped into a plurality of battery modules (2) and a protection casing (20),
unit **characterized in that** it also comprises at least one cooling device (17) according to any one of Claims 15 to 19 mounted in the casing (20) and including a plurality of cooling modules (1), preferably four of them, advantageously connected mechanically and fluidically to one another and providing a plurality of receiving sites (1') for said battery modules (2).

21. In particular electric or hybrid automobile vehicle, **characterized in that** it includes at least one battery unit (2') according to Claim 20, the or each cooling device (17) of which is connected to the engine cooling circuit of said vehicle.
